(19) Europäisches Patentamt

European Patent Office

Office européen des brevets

(11) **EP 1 236 358 B1**

(12) **EUROPEAN PATENT SPECIFICATION**

(45) Date of publication and mention
of the grant of the patent:
**22.10.2003 Bulletin 2003/43**

(21) Application number: **00979758.0**

(22) Date of filing: **27.11.2000**

(51) Int Cl.⁷: **H04N 7/58**, H04N 7/24

(86) International application number:
**PCT/GB00/04520**

(87) International publication number:
**WO 01/039508 (31.05.2001 Gazette 2001/22)**

(54) **VIDEO TRANSMISSION**

VIDEOÜBERTRAGUNG

TRANSMISSION VIDEO

(84) Designated Contracting States:
**DE FR GB**

(30) Priority: **26.11.1999 GB 9928023**

(43) Date of publication of application:
**04.09.2002 Bulletin 2002/36**

(73) Proprietor: **BRITISH TELECOMMUNICATIONS
public limited company
London EC1A 7AJ (GB)**

(72) Inventors:
• **AZMOODEH, Masoomeh
Ipswich IP5 2YA (GB)**
• **GHANBARI, Mohammed
Colchester, Essex CO3 4QQ (GB)**
• **ROSDIANA, Eva, Heritage View Condominium
Singapore 138680 (SG)**

(74) Representative: **Lloyd, Barry George William et al
BT Group Legal Services,
Intellectual Property Department,
8th Floor, Holborn Centre,
120 Holborn
London EC1N 2TE (GB)**

(56) References cited:
**EP-A- 0 550 843**

• **KEESMAN G: "MULTI-PROGRAM VIDEO
COMPRESSION USING JOINT BIT-RATE
CONTROL" PHILIPS JOURNAL OF
RESEARCH,NL,ELSEVIER, AMSTERDAM, vol.
50, no. 1/02, 1 July 1996 (1996-07-01), pages
21-45, XP000627660 ISSN: 0165-5817**
• **SWANG L ET AL: "JOINT RATE CONTROL FOR
MULTI-PROGRAM VIDEO CODING" IEEE
TRANSACTIONS ON CONSUMER
ELECTRONICS,US,IEEE INC. NEW YORK, vol.
42, no. 3, 1 August 1996 (1996-08-01), pages
300-305, XP000638506 ISSN: 0098-3063**
• **GUHA A ET AL: "MULTICHANNEL JOINT RATE
CONTROL OF VBR MPEG ENCODED VIDEO FOR
DBS APPLICATIONS" IEEE TRANSACTIONS ON
CONSUMER ELECTRONICS,US,IEEE INC. NEW
YORK, vol. 40, no. 3, 1 August 1994 (1994-08-01),
pages 616-623, XP000471227 ISSN: 0098-3063**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention is concerned with the transmission of video signals via telecommunications links, and more particularly with transmission via systems such as available bit rate (ABR) systems where available capacity is monitored and the allocation of capacity among a number of sources adjusted accordingly.

ABR is one of several types of services used in ATM (asynchronous transfer mode) networks. An ATM switch receiving from a number of sources periodically signals the allowable transmission rate back to the sources using control cells called resource management (RM) cells. Several bandwidth allocation algorithms for ABR have been proposed (see The ATM Forum Technical Committee: "Traffic Management Specification version 4.0", April 1996), one of which, called Explicit Rate Indication for Congestion Avoidance (ERICA), involves dynamically varying the allocation to a source in dependence on the pre-existing rate at which that source is transmitting.

These algorithms are designed to achieve an equitable distribution of available capacity among competing sources. However, in the case of video signals, they can suffer from the drawback that as picture content varies, some suffer a reduction in picture quality whilst others may maintain a quality well above a subjectively acceptable level.

According to one aspect of the invention there is provided a system for transmission of video signals comprising:

a plurality of video interfaces each operable to receive an input video signal and to delivering encoded video data at a controllable rate; and

an output interface connected to receive video data from the video interfaces and to deliver said data to a communications link;

wherein each video interface includes means operable to compute a measure of the complexity of the video signals and to transmit it to the output interface; and

the output interface includes control means operable to receive said measures, to compute for each source, in dependence upon the measures and the available capacity of the link, a permitted rate, and to transmit to each video interface a signal indicating the permitted rate for that interface. The video interface could be a video encoder for receiving analogue or digital video signals, or a transencoder for receiving digitally encoded video signals and delivering digitally encoded signals in the same (or different) format at a controllable rate.

The output interface could be a simple multiplexer, or may be a telecommunications switch, for example an ATM switch. If desired the switch could also receive inputs from other feeds whose bit rates are not subject to control (i.e. fixed rate or variable rate). In such a case the available capacity is the actual link capacity less the demand from these other feeds.

Some embodiments of the invention will now be described, by way of example, with reference to the accompanying drawings.

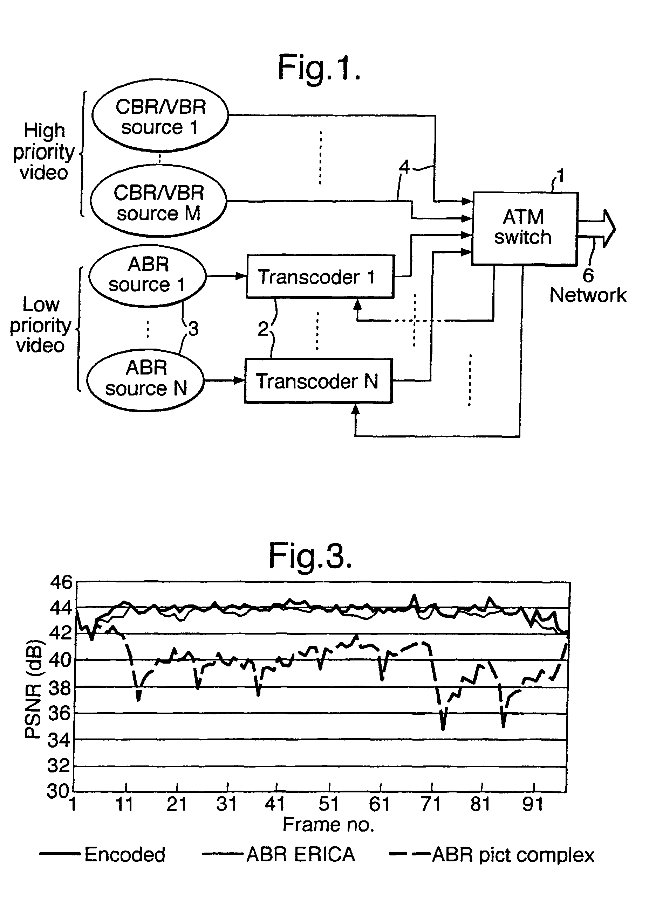

In Figure 1, an ATM switch 1 receives inputs from a plurality N of video transcoders 2 each of which receives video signals at a respective input 3. The switch 1 may also have further inputs 4 for video or other signals from fixed or variable rate sources. The output of the switch connects to a telecommunications network at 6.
The encoders 2 receive and deliver signals in accordance with the MPEG standard defined by ISO 11172.

The encoder is conventional except that:

(a) it periodically computes a picture complexity measure which it transmits to the switch 4;
(b) it receives from the switch 4 periodic signals indicating the data rate at which it is permitted to transmit.

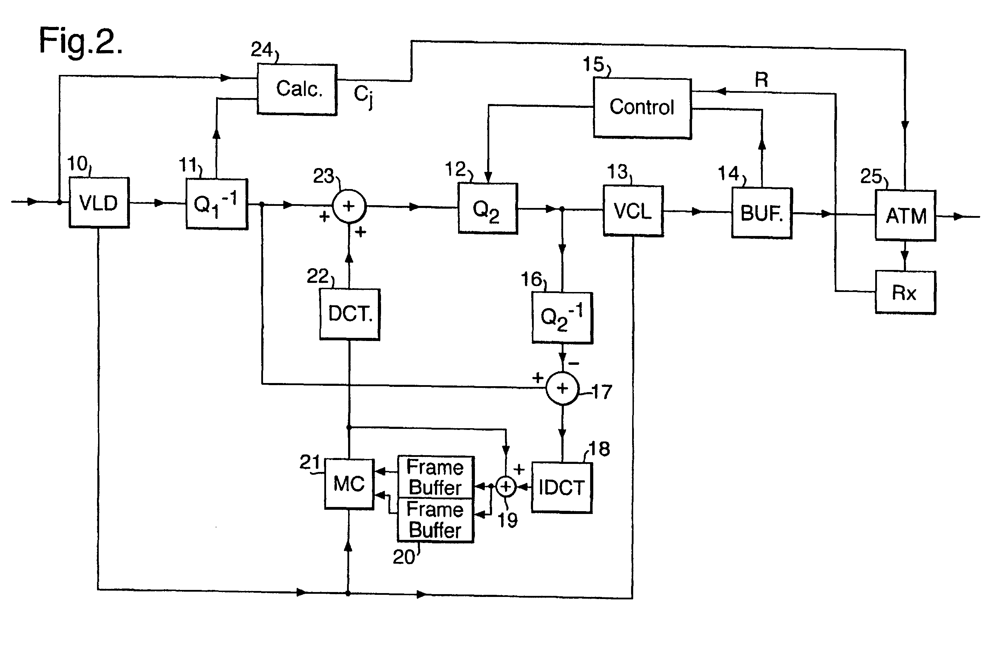

Figure 2 is a simplified block diagram of a MPEG to MPEG transcoder. Received signals first pass through a variable length decoder 10, then an inverse quantiser 11 to produce DCT transform coefficients. These are then requantised in a quantiser 12, recoded by a variable length code at 13, and fed to an output buffer 14. Because the data rate at this point varies according to picture content, a buffer control unit 15 monitors the buffer fullness and controls the quantiser 12 so that the buffer 14 can output at a desired rate without overflow or underflow.

The output of the quantiser 12 is processed by an inverse quantiser 16 and then subtracted at 17 from the output of the quantiser 11 to produce an error signal representing the error introduced by the requantisation at 12. This is converted into pixel error values, by an inverse DCT stage 18, motion compensation 19-21 and then by the DCT again at 22 to form a motion-compensated error signal which is added into the next frame in an adder 23 to correct any tendency for errors to propagate. This error control is conventional.

The complexity measure is, in this version of the invention, a complexity index C defined as follows:

$$C = \sum_{i=1}^{N} \frac{B_i Q_i}{2}$$

where $B_i$ is the number of bits used to encode frame i and $Q_i$ is the average quantiser step size used to encode frame i. The divisor '2' is not essential, but used simply because in standard MPEG, quantiser step sizes are always even numbers. The summation is over N frames where N is the number of frames (typically 12) in a "Group of Pictures" as defined by the standard. We prefer to sum, rather than use the instantaneous value, to give a degree of smoothing to the operation of the system; however this is not essential. This value could be calculated once every N frames, however we prefer to calculate it every frame over a sliding window: i.e.

$$C_j = \sum_{i=j}^{j+N-1} \frac{B_i Q_i}{2}$$

In the case of an MPEG encoder or MPEG output transencoder the product $B_i Q_i$ is conventionally calculated within the buffer control 6 for the purpose of balancing the allocation of bits among the different types (I, P and B) of frame, see, for example, M Ghanbari "Video Coding - an introduction to standard encoders" IEE, London, 1999, p. 110-111. Thus the modified encoder, or transencoder requires the additional step for performing the summation, shown in Figure 2 as a summation unit 24, though in practice it would be more convenient to implement it as additional step of a stored program controlled processor implementing the function of the control unit 15.

The values of B and Q are those at the input - i.e. at the input to the variable length decoder 10 (the received signal of course contains the value of Q for controlling the inverse quantiser 11). However, if desired, these values could both be measured at the <u>output,</u> i.e. Bi is the number of bits performed at the output of the variable length coder and Qi is the average step size used by the quantiser 13. Naturally the result is very similar. In the case of an encoder, the values at the output would be used.

In MPEG, the quantisation step size is set once for each macro block into which a frame is divided: the average step size is thus the sum of the individual values divided by the number of macro blocks per frame.

As for the rate control, a receiver 24 is provided which receives rate control signals R periodically and transfers these to the control unit 16 where it changes the target data rate which the buffer/quantiser control algorithm operate to. The control unit is otherwise conventional.

The output of the encoder is formatted into standard ATM format at 25. It will be understood that the complexity indices $C_j$ and the rate parameter R are carried in control cells (referred to as 'RM' cells) of the ATM signal.

Turning now to the ATM switch 1, this is conventional except as follows. This calculates, as is conventional, the capacity it has available on its link to the network 6, less any capacity that may be required by the inputs 4, and multiplies this by a target utilisation factor, typically 0.9 or 0.95, to give a target ABR capacity T. This capacity is distributed among the sources 2 in proportion to the complexity measures $C_i$ received - i.e., for source k of K sources:

$$R(k) = \frac{C_j(k)}{\sum_{k=1}^{K} C_j(k)}$$

The resultant permitted rate parameters R(k) are transmitted back to the respective sources 2 in the RM cells of the ATM signals.

This algorithm is similar to, but rather simpler than, conventional ABR rate control in ATM switches such as that described in Section I.5 of the above-mentioned ATM specification.

Experiments have been carried out to compare the performance of this arrangement with the known ERICA rate allocation method. Three ABR video sources, classified as easy, medium and difficult, were MPEG CBR pre-encoded at different bit rates to produce acceptable picture quality. They were transmitted over a network using the arrangement as depicted in Figure 1. For simplicity, no high priority CBR or VBR services were included in the simulation. The experiments were carried out separately for both the ERICA and the picture complexity-based rate allocation (PCBRA) algorithm described above, and the picture quality of the ABR sources were compared at the destination. Table 1 shows the parameters of both experiments. The link rate of the switch's output port was set to the sum of the ABR sources' encoded rates, i.e. 8.1 Mbit/sec (100% loading). With this service rate, there will be compression required from time to time as the rate of the MPEG video varies within the frames of a GoP.

Table 1 :

| Simulation Parameters | | | | |
|---|---|---|---|---|
| ABR Source | Picture content | Mean bit rate Mbit/s | Peak Cell Rate (PCR) Mbit/s | Minimum Cell Rate (MCR) Mbit/s |
| 1 | easy (news) | 0.694 | 2.75 | 0.208 |
| 2 | medium (drama) | 1.04 | 3.35 | 0.312 |
| 3 | difficult (mobile) | 6.37 | 15.78 | 1.9 |

The objective performance measurements for the picture quality used in this study is the Peak-to-peak Signal-to-Noise Ratio (PSNR).

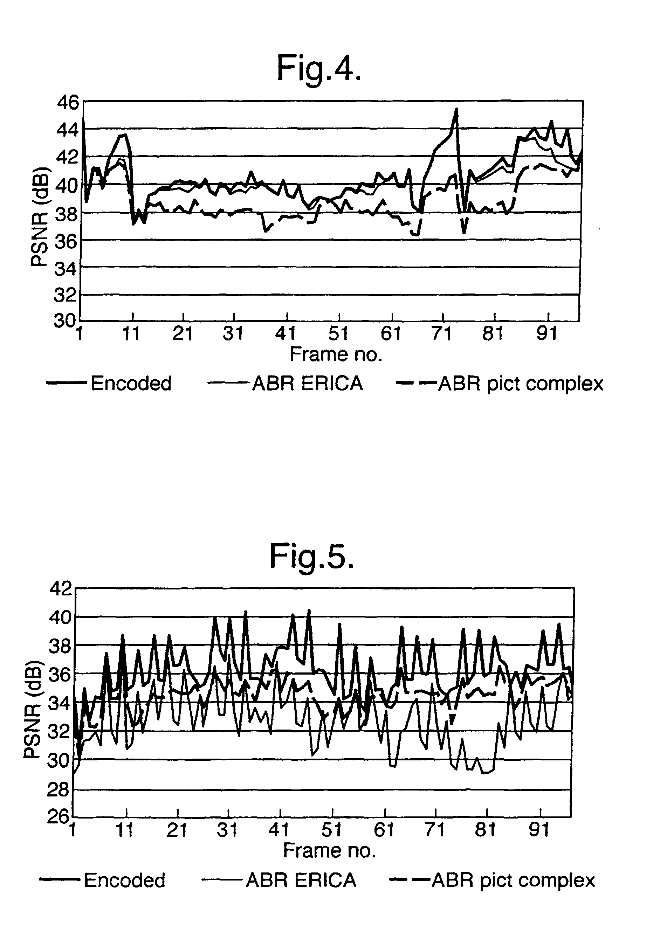

Figures 3 to 5 show the picture quality of the ABR sources at the switch output. PSNR comparisons between ERICA and PCBRA algorithms for the easy, medium and difficult video sequences are shown in figures 3, 4 and 5 respectively. For the ERICA algorithm, ABR sources 1 and 2, easy and medium respectively, have unnecessarily high PSNR while ABR source 3, the difficult sequence, has poor quality. When using complexity-based algorithm, the easy and medium sources have lower quality compared to the ERICA cases but still maintain a subjectively satisfactory level. Conversely, the difficult video has much better quality than the one in ERICA. In other words, the picture complexity based rate allocation algorithm assures fairer picture quality among the sources than the ERICA model.

It has already been mentioned that the application for the invention is not limited to ATM systems. It can, for example, be applied to any network that can feed back network congestion to the source. Also, the particular picture complexity index is not the only measure of picture complexity that can be used. For example, rather than averaging Qi, one could form the $B_i \, Q_i$ product for each macro block and sum these products for the whole frame.

This approach assumes the use of a picture-content compression algorithm which generates picture data at a variable rate by controlling the number of quantisation levels used. Thus the measure which is being formed is, in a sense, a measure of the data rate that would have been generated by an encoder had it been free to choose the rate appropriate to the prevailing picture content. So if rate control operates (instead or as well) by means other than controlling the quantisation step size (which reduces the signal to noise ratio) - for example by pixel subsampling or discarding of transform coefficients (which reduce the spatial resolution) these could also be taken into account in forming the complexity measure.

**Claims**

1. A system for transmission of video signals comprising:

    a plurality of video interfaces each operable to receive from a source an input video signal and to deliver encoded video data at a controllable rate; and
    an output interface connected to receive video data from the video interfaces and to deliver said data to a communications link;

    wherein each video interface includes means operable to compute a measure of the complexity of the video signals;
    **characterised in that** the video interfaces are arranged to transmit the measures to the output interface; and that the output interface includes control means operable to receive said measures, to compute for each source, in dependence upon the measures and the available capacity of the link, a permitted rate, and to transmit to each video interface a signal indicating the permitted rate for that interface.

2. A system according to claim 1 in which the complexity measure is formed as a function of (a) the number of bits generated by the video interface and (b) a factor indicative of the degree to which the number of bits has been reduced as a result of rate control.

3. A system according to claim 2 in which the measure of complexity of the video signals is formed by calculating for each frame of the video signals the product of the number of bits used to encode that frame and the average quantiser step size used for coding that frame.

**Patentansprüche**

1. System zur Übertragung von Videosignalen mit
einer Vielzahl von Videoschnittstellen, von denen jede betrieben werden kann, um von einer Quelle ein eingegebenes Videosignal zu empfangen und kodierte Videodaten mit einer steuerbaren Rate zu liefern; und
einer Ausgangsschnittstelle, die angeschlossen ist, um Videodaten von den Videoschnittstellen zu empfangen und diese Daten an eine Kommunikationsverbindung zu liefern,
wobei jede Videoschnittstelle eine Einrichtung enthält, die betrieben werden kann, um ein Maß der Komplexität des Videosignals zu berechnen;
**dadurch gekennzeichnet,**
**dass** die Videoschnittstellen dazu eingerichtet sind, die Maße an die Ausgangsschnittstelle zu übertragen; und
dass die Ausgangsschnittstelle eine Regelvorrichtung enthält, die betrieben werden kann, um die Maße zu empfangen, um für jede Quelle in Abhängigkeit der Maße und der verfügbaren Kapazität der Verbindung eine zulässige Rate zu berechnen, und an jede Videoschnittstelle ein Signal zu übertragen, das die zulässige Rate für diese Schnittstelle anzeigt.

2. System nach Anspruch 1, bei dem das Maß für die Komplexität als Funktion aus (a) der Anzahl der von der Videoschnittstelle erzeugten Bits und (b) einem Faktor, der den Grad anzeigt, auf den die Anzahl der Bits als Ergebnis der Ratenregelung reduziert wurde, gebildet wird.

3. System nach Anspruch 2, bei dem das Maß der Komplexität der Videosignale gebildet wird, indem für jeden Rahmen der Videosignale das Produkt der Anzahl der Bits, die für die Kodierung dieses Rahmens benutzt wurden, und der durchschnittlichen Schrittweite Quantisierers, der für die Kodierung dieses Rahmens verwendet wurde, gebildet wird.

**Revendications**

1. Système de transmission de signaux vidéos comprenant :

une pluralité d'interfaces vidéos chacune utilisable pour recevoir depuis une source un signal vidéo d'entrée et pour livrer des données vidéos codées à un débit contrôlable ; et
une interface de sortie connectée pour recevoir des données vidéos depuis les interfaces vidéos et pour livrer lesdites données vers un lien de communication ;

dans lequel chaque interface vidéo comprend le moyen utilisable pour calculer une mesure de la complexité des signaux vidéo ;
**caractérisé en ce que** les interfaces vidéos sont disposées pour transmettre les mesures vers l'interface de sortie ; et **en ce que** l'interface de sortie comprend le moyen de commande utilisable pour recevoir lesdites mesures, pour calculer pour chaque source, en fonction des mesures et de la capacité disponible du lien, un débit autorisé, et pour transmettre vers chaque interface vidéo un signal indiquant le débit autorisé pour cette interface.

2. Système selon la revendication 1, dans lequel la mesure de complexité est formée en tant que fonction du (a) nombre de bits générés par l'interface vidéo et (b) d'un facteur indiquant le degré auquel le nombre de bits a été réduit en tant que résultat du contrôle de débit.

3. Système selon la revendication 2, dans lequel la mesure de complexité des signaux vidéos est formée en calculant pour chaque trame des signaux vidéos le produit du nombre de bits utilisé pour coder cette trame et la taille moyenne du pas de quantificateur utilisée pour coder cette trame.

# Fig.1.

High priority video
{
CBR/VBR source 1
⋮
CBR/VBR source M
}

Low priority video
{
ABR source 1
⋮
ABR source N
}

3

Transcoder 1

2

⋮

Transcoder N

4

1

ATM switch

6

Network

# Fig.3.

Encoded ――― ABR ERICA ― ― ABR pict complex

Fig.2.

EP 1 236 358 B1

# Fig.4.

Encoded —— ABR ERICA ——ABR pict complex

# Fig.5.

Encoded —— ABR ERICA ——ABR pict complex